Europäisches Patentamt

European Patent Office

Office européen des brevets

(11) Publication number: **0 205 695 A2**

# EUROPEAN PATENT APPLICATION

(21) Application number: 85304450.1

(22) Date of filing: 21.06.85

(51) Int. Cl.⁴: **C 23 F 11/06, B 01 D 53/14**

(30) Priority: 22.04.85 US 725607

(43) Date of publication of application: 30.12.86
Bulletin 86/52

(84) Designated Contracting States: GB NL

(71) Applicant: THE DOW CHEMICAL COMPANY, 2030 Dow Center Abbott Road P.O. Box 1967, Midland, MI 48640 (US)

(72) Inventor: Pearce, Roscoe L., 313 Narcissus, Lake Jackson Texas 77566 (US)
Inventor: Wolcott, Richard A., 103 Finch, Angleton Texas 77515 (US)
Inventor: Du Part, Michael S., 1420 Bellaire Blvd., Alvin Texas 77511 (US)
Inventor: Lewno, Jeffrey A., 909 Plantation, Angleton Texas 77566 (US)
Inventor: Oakes, Billy D., 444 Southern Oaks Drive, Lake Jackson Texas 77566 (US)

(74) Representative: Burford, Anthony Frederick et al, W.H. Beck, Greener & Co. 7 Stone Buildings Lincoln's Inn, London WC2A 3SZ (GB)

(54) Gas conditioning crevice corrosion inhibitors.

(57) Crevice corrosion in gas processing equipment using aqueous alkanolamine solutions to remove acid gases is inhibited by adding to and maintaining in the alkanolamine solution crevice corrosion-inhibiting amounts of nickel ions and thiocyanate ions. In carbon steel equipment at least 100 ppm nickel ions and at least 150 ppm thiocyanate ions are used but in stainless steel equipment the nickel ion concentration can be reduced to 25 ppm.

EP 0 205 695 A2

## GAS CONDITIONING CREVICE
## CORROSION INHIBITORS

This invention relates to a method for inhibiting crevice corrosion in acid gas removal equipment.

It is well-known from the prior art that acid gases such as carbon dioxide, hydrogen sulfide and carbonyl sulfide can be removed from gaseous feed streams such as natural gas and synthesis gas using dilute aqueous solutions of potassium carbonate, alkanolamines such as monoethanolamine, diethanolamine, and methyldiethanolamine, and other weak bases. The usual procedure is to use a contactor wherein the absorbent solution contacts the feed stream countercurrently and to use a regenerator with a reboiler wherein the rich absorbent containing the acid gas component is regenerated back to the free absorbent. The solution is then pumped back to the contactor for reuse.

There has been much activity devoted to solving the problem of general metallic corrosion in the equipment used in the above process. This

0205695

problem is particularly acute and/or chronic when mild steel alloys are used in the equipment to save on capital costs over the use of more exotic and expensive metal alloys such as stainless steel. It is, of course, common practice to use stainless steel and nickel alloys in sensitive areas such as heat--exchange equipment.

US 3,808,140 (April 30, 1974) provides for inhibition of alkanolamine solution by using minor amounts of vanadium and antimony compounds, nitro-substituted aromatic acids or salts thereof, and stannous salts.

US 4,071,470 (January 31, 1978) provides for inhibition of alkanolamine solutions using a minor amount of the reaction product of copper, sulfur, and an alkanolamine.

US 4,096,085 (June 20, 1978) provides for inhibition of alkanolamine solutions using minor amounts of a polyamine, with or without copper and sulfur.

US 4,100,099 (July 11, 1978) provides for inhibition of sour gas conditioning fluids using minor amounts of quaternary pyridinium salts and alkylene polyamines.

US 4,100,100 (July 11, 1978) provides for inhibition of sour gas conditioning fluids using minor amounts of quaternary pyridinium salts,

thiocyanate compounds or thioamide compounds, and divalent cobalt compounds.

US 4,102,804 (July 25, 1978) provides for inhibition of sour gas conditioning solutions using minor amounts of a quaternary pyridinium salt, and a thiocyanate compound, a sulfide compound or a thioamide compound.

US 4,116,629 (September 26, 1978) provides for the corrosion inhibition of stainless steels (types 410 and 430) when in contact with carbonate solutions by using nickel salts.

US 4,143,119 (March 6, 1979) provides for inhibition of sour gas conditioning solutions using minor amounts of copper and a polysulfide generated in situ.

US 4,431,563 discloses a method of inhibiting general corrosion in gas conditioning apparatus whereby corrosion is inhibited by the use of thionitrogen compounds in combination with soluble metal salts such as nickel and cobalt salts.

According to Fontana and Greene "Corrosion Engineering", 2nd Edition, page 39, crevice corrosion is known as intense localized corrosion which occurs within crevices and other shielded areas on metal surfaces which are in a corrosive environment. This type of attack is usually associated with small volumes of stagnant solution which occur as a result of entrapment in between metal and gasket surfaces, lap joints, crevices under bolt heads, etc.

Apparatus for detecting and measuring crevice corrosion are known from US 3,116,117 and 3,599,090.

While the above compositions and/or processes are effective for general corrosion, they do not teach or are they adequate for the inhibition of crevice corrosion.

It now has been surprisingly discovered that the crevice corrosion of iron and steel in gas removal equipment can be effectively reduced by using a gas conditioning alkanolamine solution inhibited by effective amounts of a combination or a mixture of thiocyanate ions and nickel ions.

The inhibitors used in this invention are constantly replenished or maintained in the gas conditioning solution in order to obtain effective passivation.

The process claimed herein is unique in that it reduces crevice corrosion of all ferrous surfaces, i.e., not only mild steel but also stainless steel surfaces.

The crevice corrosion inhibitors used in this invention are effective in aqueous solutions of alkanolamines such as monoethanolamine,

diethanolamine, triethanolamine, methyldiethanolamine and related alkanolamines that are commonly
used to remove acid gases from gas streams.

The alkanolamines are used in an aqueous solution having 10 to 80 percent by weight of
alkanolamines. The preferred range is 20 to 60
percent and the most preferred range is 30 to 50
percent by weight.

The impure gaseous feed streams which
can be treated with the inhibited gas conditioning
solutions of this invention to remove carbon dioxide can generally contain no more than a few parts
per million (1-5 ppm) of hydrogen sulfide and/or
carbonyl sulfide.

Examples of soluble nickel compounds
useful to provide the nickel ions are nickelous
sulfate, nitrate, acetate, tartrate, citrate, carbonate, and thiocyanate. Since nickel usually
behaves as a divalent metal, all references to
nickel salts hereinafter are meant to include
nickelous salts.

Examples of soluble thiocyanate compounds useful to provide the thiocyanate ions are
ammonium thiocyanate, alkali metal thiocyanates
such as potassium thiocyanate and sodium thiocyanate, alkaline earth metal thiocyanates, and transition metal thiocyanates.

Nickel thiocyanate is particularly useful and/or convenient since it supplies both the required ions in one compound.

It is to be noted that the terms soluble compound or salt means for the purpose of this invention that the compound is sufficiently soluble in the aqueous gas conditioning solution, i.e., aqueous alkanolamine to be useful herein. Generally, this means the salt or compound must be soluble to the extent of 25 ppm or greater.

It has been found that for carbon steel equipment, the thiocyanate inhibitors must be maintained in the gas conditioning solutions in amounts to supply from 150 ppm or greater of the thiocyanate ion. Since these compounds are depleted during use, large amounts of the compounds to provide 500 ppm or more of the thiocyanate ions can be used at start-up and periodic additions can be made thereafter to maintain the required effective amounts in the solution. A range from 150 to 2,000 ppm of the thiocyanate ions has been found to be an effective amount and a range from 200 to 400 ppm is the preferred range. Amounts greater than 2000 ppm, while effective, are not economical.

The nickel salts must be maintained in the gas conditioning solutions in amounts to supply from 100 ppm or greater of the nickel ions. A range from 100 to 2000 ppm has been found to be an effective amount and a range from 100 to 200 ppm is the preferred range.  Amounts greater than 2000 ppm are also effective but not economical.

When the inhibitors of this invention are used with stainless steel equipment, it has been found that the level of nickel ions can be lowered to at least 25 ppm.

The expression "ppm" refers to parts per million by weight.


Example 1

A test for crevice corrosion was devised by utilizing metal test coupons made from carbon steel (SAE 1020) as the heat transfer surface for the evaluation.  The test solution and its glass container was inverted and sealed against the coupon with an elastomeric O-ring and an electrically heated aluminum block under the coupon supplied a carefully controlled 149°C (300°F) temperature to the test coupon which was transferred to the test solution giving a bulk solution temperature of 102°C (216°F).

Crevice and general corrosion are both measured after a test run of 7 days (168 hours). Microscopic examination was used for a determination of the rate of crevice formation and the depth and width thereof.

0205695

Monoethanolamine was added to deionized water to make a test solution of 1000 $cm^3$ containing 30 percent by weight of monoethanolamine (MEA). The deionized water was saturated with $CO_2$ prior to use. Nickel sulfate ($NiSO_4$ $6H_2O$) and/or ammonium thiocyanate was added to this test solution in sufficient amounts to give the concentrations set forth in Table I.

## TABLE I

Crevice Corrosion Test Data
30% Fresh MEA in Water (Deionized)
Saturated with $CO_2$ at 300°F (149°C) Coupon Temperature

| Examples | Metal | $Ni^{+2}$ (in PPM) | $SCN^-$ (in PPM) | General Corr. MPY* ($\mu m/y$) | | Average Crevice Depth inches (cm) | | Average Crevice Width inches (cm) | | Crevice Corr. Rate MPY* ($\mu m/y$) | |
|---|---|---|---|---|---|---|---|---|---|---|---|
| Control 1 | 1020CS | 0 | 0 | 191 | (4851.4) | 0.0132 | (0.0335) | 0.072 | (0.183) | 685 | (17399) |
| Control 2 | 1020CS | 0 | 200 | 79 | (2006.6) | 0.0116 | (0.0295) | 0.035 | (0.089) | 606 | (15392.4) |
| Control 3 | 1020CS | 10 | 200 | 29 | (736.6) | 0.0104 | (0.026) | 0.019 | (0.048) | 540 | (13716) |
| Control 4 | 1020CS | 100 | 200 | 9 | (228.6) | 0.0023 | (0.006) | 0.015 | (0.038) | 118 | (2997.2) |
| Example 1 | 1020CS | 200 | 200 | 2 | (50.8) | 0 | | 0 | | 0 | |

*MPY = mils per year

In Table I, Example 1 shows the concentrations of both $Ni^{+2}$ and $SCN^-$ necessary to give protection against both general and crevice attack on SAE 1020 CS (cold rolled steel).

## Examples 2-8

The testing procedure of Example 1 was repeated with SAE 1020 coupons only. The crevice corrosion was visually observed and reported as severe, very bad, bad, moderate, trace, shadow, or none. The results are set forth in Table II. It is to be understood that the controls in Table II represent and/or illustrate the lower limits which in actual practice would not be acceptable.

## Examples 9-12

The testing procedure of Example 1 was repeated with SAE 304 stainless steel coupons only. The visual observation of crevice corrosion was the same as in Examples 2-8. The results are set forth in Table III.

## Example 13

A commercial plant processing 350 MM scfd (million standard cubic feet per day) (9.9 MM $m^3$/day) of natural gas containing about 10 percent carbon dioxide was processed with a 30 percent monoethanolamine (MEA) solution containing 80-120 ppm $Ni^{+2}$ and 200-250 ppm $SCN^-$ for a period of over six months. The inhibitor levels varied due to normal depletion and periodic additions. The general corrosion did not exceed 5 mpy (127 $\mu$m/y) and the crevice corrosion remained at essentially zero. The corrosion observations were made on both carbon steel and 304 stainless steel vessel components.

## TABLE II

Crevice Corrosion Test Data with
SAE 1020 Coupons 30% Fresh MEA in Water
Saturated wth $CO_2$ at 300°F (149°C) Coupon Temperature

| Examples | $Ni^{+2}$ (in PPM) | $SCN^-$ (in PPM) | Crevice Corrosion* | General Corr. MPY** (μm/y) | | Notes |
|---|---|---|---|---|---|---|
| Control 5 | 0 | 200 | severe | 29 | (736.6) | using 400°F (204°C) |
| Control 6 | 0 | 200 | severe | 31 | (787.4) | |
| Control 7 | 0 | 200 | severe | 22 | (558.8) | using 250°F (121°C) |
| Control 8 | 10 | 200 | bad | 3.1 | (78.4) | using 400°F (204°C) |
| Control 9 | 10 | 200 | bad | 9.7 | (246.4) | |
| Control 10 | 10 | 200 | bad | 7.5 | (190.5) | using 250°F (121°C) |
| Control 11 | 10 | 200 | severe | 13.1 | (332.7) | |
| Control 12 | 20 | 200 | moderate | 9.1 | (231.1) | |
| Control 13 | 40 | 200 | moderate | 7.9 | (200.7) | |
| Control 14 | 60 | 200 | moderate | 8.9 | (226.1) | |
| Control 15 | 100 | 100 | trace | 7.5 | (190.5) | |
| Control 16 | 80 | 200 | trace | 9.3 | (236.2) | |
| Example 2 | 200 | 200 | none | 4.1 | (104.1) | |
| Example 3 | 100 | 400 | none | 3.1 | (78.7) | |
| Example 4 | 400 | 800 | shadow | 4.7 | (119.4) | |
| Example 5 | 150 | 250 | none | 3.1 | (78.7) | |
| Example 6 | 133 | 266 | none | 2.1 | (53.3) | |
| Example 7 | 250 | 500 | shadow | 2.1 | (53.3) | |
| Example 8 | 250 | 250 | none | 2.2 | (55.9) | |

TABLE II (Cont'd)

*The terms used have the following meanings:

None - no evidence of crevice corrosion.
Shadow - no evidence of crevice corrosion but exposed surfaces are stained.
Trace - microscopic examination reveals some small pitting.
Moderate - crevice depth is 0.005 to 0.010 inches (0.015 to 0.025cm) with a
            depth to width ratio of 1:2 to 1:3.
Bad - crevice depth is 0.010 to 0.020 inches (0.025 to 0.050cm) with a depth
       to width ratio of 1:2 to 1:3.
Very bad - crevice depth is 0.020 to 0.025 inches (0.050 to 0.065) with a
            depth to width ratio of 1:15 to 1:20.
Severe - crevice depth is 0.025 to 0.030 inches (0.065 to 0.075cm) with a
          depth to width ratio of 1:2 to 1:25.

**MPY = mils per year

DOW 32704 EP

TABLE III

Crevice Corrosion Test Data with
SAE 304 Coupons 25% Fresh MEA in Water
Saturated with $CO_2$ at 300°F (149°C) Coupon Temperature

| Examples | $Ni^{+2}$ (in PPM) | $SCN^-$ (in PPM) | Crevice Corrosion* | General Corr. MPY** ($\mu m/y$) |
|---|---|---|---|---|
| Control 15 | 0 | 250 | severe | 35.7 (906.8) |
| Control 16 | 5 | 250 | very bad | 24.6 (624.8) |
| Example 9 | 25 | 250 | none | 2.0 (50.8) |
| Example 10 | 50 | 250 | none | 3.0 (76.2) |
| Example 11 | 75 | 250 | none | 1.0 (25.4) |
| Example 12 | 100 | 250 | none | 1.0 (25.4) |

*See Table II for definitions.

**MPY = mils per year

## CLAIMS

1.   A method of inhibiting crevice corrosion by aqueous alkanolamine solutions in carbon steel or stainless steel acid gas removal equipment wherein said solution contains 10 to 80 percent by weight of alkanolamines which is characterized by maintaining in said solution a mixture of an effective amount of a nickel ion and an effective amount of a thiocyanate ion.

2.   A method as claimed in Claim 1, characterized in that the effective amount of nickel ion is at least 100 parts per million and the effective amount of thiocyanate ion is at least 150 parts per million where carbon steel is involved.

3.   A method as claimed in Claim 1, characterized in that the effective amount of nickel ion is at least 25 parts per million and the effective amount of thiocyanate ion is at least 150 parts per million where stainless steel is involved.

4.   A method as claimed in any one of the preceding claims, characterized in that the effective amount of nickel ion is in the range from 100 to 2000 parts per million and the effective amount of thiocyanate ion is in the range from 150 to 2000 parts per million.

5.   A method as claimed in Claim 4, characterized in that said effective amount of the nickel ion is in the range from 100 to 200 parts per million and the thiocyanate ion is in the range from 200 to 400 parts per million.

6.    A method as claimed in any one of the preceding claims, characterized in that said alkanolamine is selected from monoethanolamine, diethanolamine, triethanolamine and methyl diethanolamine.

7.    A method as claimed in any one of the preceding claims, characterized in that the said nickel ion is provided by a soluble nickel salt having an anion selected from the sulfate, nitrate, acetate, tartrate, citrate, and carbonate anions.

8.    A method as claimed in any one of the preceding claims, characterized in that said thiocyanate ion is provided by a soluble thiocyanate salt having a cation selected from ammonium, alkali metal, alkaline earth metal, and transition metal cations.

9.    A method as claimed in any one of Claims 1 to 6, characterized in that the nickel and thiocyanate ions are present as nickel thiocyanate.

10.  A method as claimed in any one of the preceding claims, characterised in that the concentrations of nickel and thiocyanate ions is sufficient to reduce general corrosion to no more than 5 mils per year.

11.  A method as claimed in any one of the preceding claims, characterized in that the concentrations of nickel and thiocyanate ions is sufficient to reduce average crevice depth to no more than 0.002 inches.